# EUROPEAN PATENT APPLICATION

(11) **EP 2 336 067 A1**
(43) Date of publication of application: **22.06.2011**
(21) Application number: 08809096.4
(22) Date of filing: 20.08.2008
(51) Int. Cl.: B66B 1/06

(54) **ELEVATOR GROUP MANAGEMENT DEVICE AND ELEVATOR GROUP MANAGEMENT METHOD**

(71) Applicant: Mitsubishi Electric Corporation, Tokyo 100-8310 (JP)
(72) Inventor: AMANO, Masaaki, Tokyo 100-8310 (JP)
(74) Representative: HOFFMANN EITLE
(86) International application number: PCT/JP2008/064781
(87) International publication number: WO 2010/021028

(57) **Abstract**

It is intended to provide an elevator group management apparatus having high versatility and a stably-large electric-power-saving effect. An operation status measurement unit 109 measures a frequency (e.g., number of running times) of power operation of an entire elevator group, and a frequency (e.g., number of running times) of regeneration operation of the entire elevator group. The operation status measurement unit 109 calculates a ratio between the frequency of the regeneration operation and the frequency of the power operation. When the ratio between the frequency of the regeneration operation and the frequency of the power operation is greater than a predetermined value (e.g., 2.0), an assigned car selection unit 106 selects an elevator (i.e., a car 103) from the elevator group according to a preset priority order. A car halt unit 110 halts the operation of the car 103 selected by the assigned car selection unit 106.

## Description

### Technical Field

The present invention relates to an elevator group management apparatus and an elevator group management method.

### Background Art

In recent years, due to employing a microcomputer, a group management apparatus which controls a plurality of elevators is becoming capable of realizing processing of a large amount of data and a high-level control.

In recent years, realization of environment-conscious products is becoming demanded for various industrial products including elevators. In large-scale high-rise buildings equipped with several tens of elevators, electric power consumption due to running elevators has become non-negligible.

Conventionally, some measures for power saving in a group management apparatus have been proposed. For example, in Patent Literature 1, there is proposed a method of detecting the number of persons currently in a building, and controlling the number of cars to be halted, based on comparison with the predetermined number of registered persons and based on a time of day. In Patent Literature 2, there is proposed, when an inactive waiting car responds to a call, to turn on the light in the car at the time of reaching the calling floor. In Patent Literature 3, there is proposed to preferentially assign a landing call so that a car may be operated in the regeneration direction, based on a balance weight and a car load.

Note that an elevator is generally designed in such a way that a balance weight tractionally connected to a car may balance when the car is half-loaded. Accordingly, for example, when the car is fully loaded and operated downward, the motor generates electric power. The operation direction of the car at this time is called a regeneration direction. On the other hand, for example, when the car is fully loaded, in order for the car to be operated upward, the motor needs to be supplied with electric power so as to generate power. The operation direction of the car at this time is called a power direction.
Patent Literature 1: Japanese Unexamined Patent Publication JP 54-159954 A
Patent Literature 2: Japanese Unexamined Patent Publication JP 7-247061 A
Patent Literature 3; Japanese Unexamined Patent Publication JP 9-227033 A

### Disclosure of Invention

### Technical Problem

In conventional techniques, for example, a means separated from the group management apparatus is used for detecting the number of persons in a building and the number of registered persons are predetermined, and thus versatility is low. Moreover, merely the timing of fuming on the light in a car is controlled, and thus electric power saving effect is low. Moreover, the number of persons getting onto a car is estimated every time a landing call is generated and the operation of the car is controlled based on the estimated number, and thus the electric power saving effect is influenced by the precision of the estimation.

Furthermore, in the conventional techniques, it has not been proposed, for example, to vary electric power saving with seasons such as summer and winter when electric power consumption increases. Moreover, it has not been proposed to select a car to be halted while considering convenience to users. Although there is a technique in which a landing call is preferentially assigned so that a car may be operated in the regeneration direction, it cannot be guaranteed that the car will be operated in the regeneration direction whenever a landing call is generated, and consideration of increasing the ratio of the operation of the car in the regeneration direction, as a whole, in view of a long period such as one day, has not been performed.

The present invention aims, for example, to provide an elevator group management apparatus having high versatility and a stably-large electric-power-saving effect.

### Solution to Problem

An elevator group management apparatus according to one aspect of the present invention, which is an elevator group management apparatus for managing a plurality of elevators as a group, includes:
an operation state quantity measurement unit adapted to measure an operation state quantity indicating an operation state in a power direction and a regeneration direction of each elevator of the group, and to accumulate data of the measured operation state quantity in a storage device;
a ratio calculation unit adapted to tally the data of the operation state quantity accumulated in the storage device by the operation state quantity measurement unit, and, based on a corresponding tally result, to calculate a ratio of the operation state quantity in the regeneration direction of the group to the operation state quantity in the power direction of the group; and
an operation halt unit adapted to select, when the ratio calculated by the ratio calculation unit is greater than a predetermined ratio, an elevator from the group according to a preset priority order, and to halt an operation of the selected elevator.

The elevator group management apparatus further includes:
a time measurement unit adapted to measure an amount of time between when a landing call is generated at a landing where each elevator of the group arrives and departs and when one elevator of the group arrives at the landing, and to accumulate data of the measured amount of time in the storage device; and
a delay state quantity calculation unit adapted to tally data of the amount of time accumulated in the storage device by the time measurement unit, and, based on a corresponding tally result, to calculate a delay state quantity indicating a delay state of the group in response to the landing call,
wherein, further when the delay state quantity calculated by the delay state quantity calculation unit is less than a predetermined quantity, the operation halt unit selects an elevator from the group according to the priority order and halts an operation of the selected elevator.

Further when a current time and date corresponds to a predetermined period, the operation halt unit selects an elevator from the group according to the priority order and halts an operation of the selected elevator.

The operation state measurement unit measures any of a number of times, an amount of time, and a distance of an operation in the power direction and in the regeneration direction of each elevator of the group, as the operation state quantity.

The delay state quantity calculation unit calculates a mean value of the amount of time measured by the time measurement unit, as the delay state quantity.

The delay state quantity calculation unit calculates a ratio of a number of times that the amount of time measured by the time measurement unit is greater than or equal to a predetermined amount of time to a number of times that the landing call is generated at the landing, as the delay state quantity.

The priority order is set based on an arrangement of a landing side door of each elevator at a landing where each elevator of the group arrives and departs.

An elevator group management method according to one aspect of the present invention, which is an elevator group management method for managing a plurality of elevators as a group, includes:
measuring an operation state quantity indicating an operation state in a power direction and a regeneration direction of each elevator of the group, and accumulating data of the measured operation state quantity in a storage device, by an operation state quantity measurement unit;
tallying data of the operation state quantity accumulated in the storage device by the operation state quantity measurement unit, and, based on a corresponding tally result, calculating a ratio of the operation state quantity in the regeneration direction of the group to the operation state quantity in the power direction of the group, by a ratio calculation unit; and
selecting, when the ratio calculated by the ratio calculation unit is greater than a predetermined ratio, an elevator from the group according to a preset priority order, and halting an operation of the selected elevator, by an operation halt unit.

### Advantageous Effects of invention

According to one aspect of the present invention, in an elevator group management apparatus, an operation state quantity measurement unit measures an operation state quantity indicating an operation state in the power direction and the regeneration direction of each elevator of the group, and accumulates data of the measured operation state quantity into a storage device. A ratio calculation unit tallies the data of the operation state quantity accumulated in the storage device by the operation state quantity measurement unit, and, based on a corresponding tally result, calculates a ratio of the operation state quantity in the regeneration direction of the group to the operation state quantity in the power direction of the group. An operation halt unit selects, when the ratio calculated by the ratio calculation unit is greater than a predetermined ratio, an elevator from the group according to a preset priority order, and halts the operation of the selected elevator. Thereby, for example, it becomes possible to provide an elevator group management apparatus having high versatility and a stably-large electric-power-saving effect.

### Description of Preferred Embodiments

Embodiments of the present invention will be described hereafter with reference to figures.

### Embodiment 1

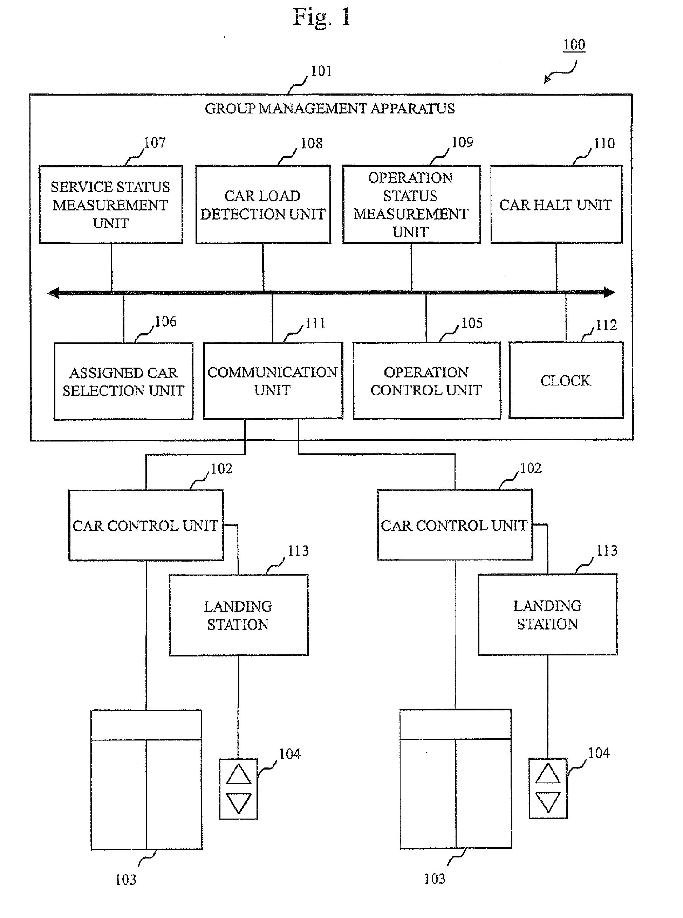

Fig. 1 is a block diagram showing configuration of an elevator system 100 according to the present Embodiment.

In Fig. 1, the elevator system 100 includes a group management apparatus 101, car control units 102, cars 103 (may also be hereinafter called "elevators"), landing buttons 104, and landing stations 113. The group management apparatus 101 is installed in a machine room, and manages a plurality of elevators as a group. A car control unit 102 is installed for each car 103, and controls operation of each car 103. A landing button 104 is placed in a landing and calls a car 103 to come to the landing. There are landing buttons 104 specifying up-elevators and landing buttons 104 specifying down-elevators. When a landing button 104 is pushed down and generates a landing call, the group management apparatus 101 assigns a car 103 to the landing call. A landing station 113 is placed in a landing, and performs communication between other equipment placed in the landing and a car control unit 102. For example, the landing station 113 receives a signal indicating that a landing button 104 was pushed down from the landing button 104, and transmits a signal indicating that a landing call was generated to the car control unit 102. At this time, the car control unit 102 notifies the group management apparatus 101 that the landing call was generated. The landing station 113 receives a signal indicating that the car 103 corresponding to the landing call has arrived from the car control unit 102, and transmits a signal indicating arrival of the car 103 to the landing button 104.

The group management apparatus 101 includes an operation control unit 105, an assigned car selection unit 106, a service status measurement unit 107, a car load detection unit 108, an operation status measurement unit 109, a car halt unit 110, a communication unit 111, and a clock 112. The operation control unit 105 controls operation of the entire elevators. When notified by a car control unit 102 that a landing call was generated, the assigned car selection unit 106 selects a car 103 in response to the landing call. The service status measurement unit 107 evaluates a service status by measuring an amount of waiting time etc. of the entire elevators. The car load detection unit 108 detects the load of users in a car 103 by a weighing device installed in the car 103. The operation status measurement unit 109 measures how frequently each car 103 is operated in the power direction and how frequently each car 103 is operated in the regeneration direction (e.g., number of running times, amount of running time, running distance, etc.). The car halt unit 110 preferentially halts a predetermined car 103. The communication unit 111 performs serial communication between the group management apparatus 101 and the car control unit 102. The clock 112 outputs date and time information.

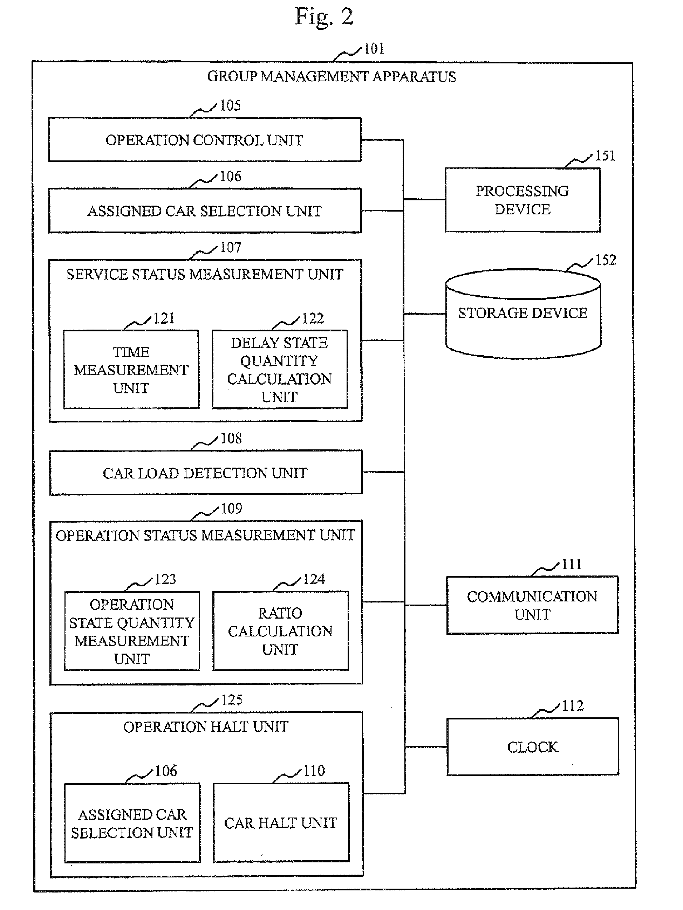

Fig. 2 is a block diagram showing configuration of the group management apparatus 101.

In Fig. 2, the group management apparatus 101 includes the operation control unit 105, the service status measurement unit 107, the car load detection unit 108, the operation status measurement unit 109, the communication unit 111, the clock 112, and an operation halt unit 125. The group management apparatus 101 includes a time measurement unit 121 and a delay state quantity calculation unit 122 inside the service status measurement unit 107. The group management apparatus 101 includes an operation state quantity measurement unit 123 and a ratio calculation unit 124 inside the operation status measurement unit 109. The group management apparatus 101 includes the assigned car selection unit 106 and the car halt unit 110 inside the operation halt unit 125. The group management apparatus 101 is implemented by a microcomputer equipped with hardware, such as a processing device 151 and a storage device 152. The hardware is used by each unit of the group management apparatus 101. For example, the processing device 151 is used for performing operation, processing, reading, writing, etc. of data and information in each unit of the group management apparatus 101. The storage device 152 is used for storing the data and information. Operation of each unit of the group management apparatus 101 wilt be described later. Note that the operation control unit 105, the service status measurement unit 107, the car load detection unit 108, the operation status measurement unit 109, the communication unit 111, and the operation halt unit 125 are composed of software in the microcomputer.

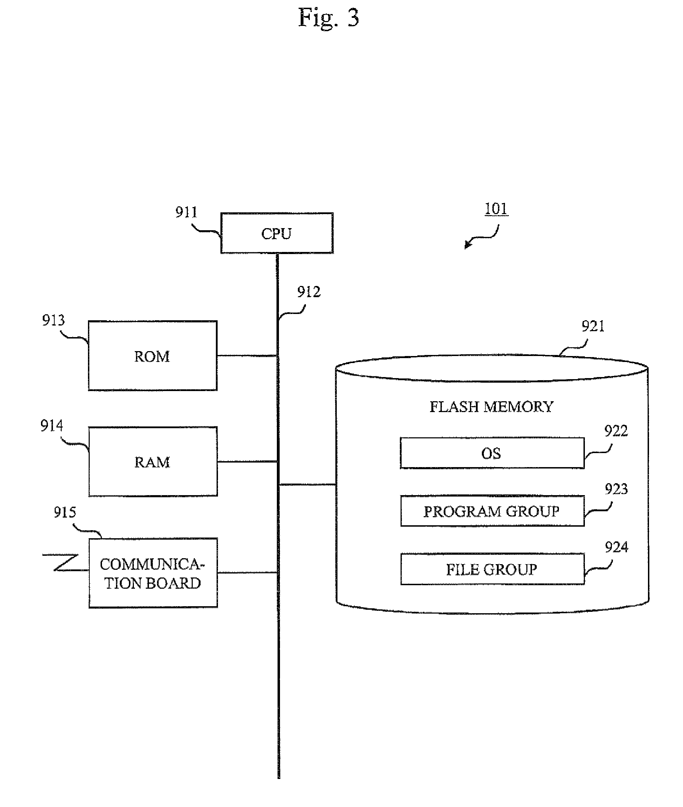

Fig. 3 is a diagram showing an example of hardware configuration of the group management apparatus 101.

In Fig. 3, the group management apparatus 101 is mainly composed of a microcomputer, and includes a CPU (Central Processing Unit) 911 which executes programs. The CPU 911 is an example of the processing device 151. The CPU 911 is connected, through a bus 912, to a ROM (Read Only Memory) 913, a RAM (Random Access Memory) 914, a communication board 915, and a flash memory 921, and controls these hardware devices. Instead of the flash memory 921, a storage medium, such as an HDD (Hard Disk Drive) and a memory card reader/writer, may be used.

The RAM 914 is an example of a volatile memory. The storage media of the ROM 913 and the flash memory 921 are examples of a nonvolatile memory. These are examples of the storage device 152.

The communication board 915 is connected to a LAN (Local Area Network) etc. The communication board 915 may be connected not only to the LAN but also to the Internet or a WAN (Wide Area Network), such as an IP-VPN (Internet Protocol Virtual Private Network), a wide area LAN, and an ATM (Asynchronous Transfer Mode) network. The LAN, the Internet, and the WAN are examples of a network.

An OS (Operating System) 922, a program group 923, and a file group 924 are stored in the flash memory 921. Programs of the program group 923 are executed by the CPU 911 and the OS 922. In the program group 923, programs that execute functions, each described as " ... unit" in the explanation of the present Embodiment, are stored. The programs are read and executed by the CPU 911. In the file group 924, data, information, signal values, variable values, and parameters described as " ... data", " ... information", " ... ID (identifier)", ... flag", or " ... result" in the explanation of the present Embodiment are stored as each item of ... file", " ... database", or " ... table". The " ... file", " ... database", or " .., table" are stored in a storage medium, such as a disk or a memory. The data, information, signal values, variable values, and parameters stored in the storage medium, such as a disk or a memory, are read in a main memory or a cache memory by the CPU 911 via a read/write circuit, and used for the CPU 911 processing (operation), such as extraction, search, reference, comparison, operation, calculation, control, and output. During the CPU 911 processing, such as extraction, search, reference, comparison, operation, calculation, control, and output, the data, information, signal values, variable values, and parameters are temporarily stored in the main memory, the cache memory, or a buffer memory.

Moreover, arrows in the block diagrams and the flowchart used in the explanation of the present Embodiment mainly show input and output of data and signals. The data and signals are recorded on a recording medium, such as the RAM 914 and the flash memory 921. Moreover, the data and signals are transmitted through the bus 912, signal lines, cables, or other transmission media.

Further, what is described as a " ... unit" in the explanation of the present Embodiment may be " ... circuit", " ... apparatus", or " ... device", or may be " ... step", " ... process", " ... procedure", or " ... processing". That is, what is described as " ... unit" may be implemented by firmware stored in the ROM 913. Otherwise, it may be implemented by software only, hardware only such as an element, a device, a substrate, and a wire, or a combination of software and hardware, or alternatively a combination further with firmware. Firmware and software are stored as programs in a recording medium, such as the flash memory 921. The programs are read by the CPU 911 and executed by the CPU 911. That is, the programs make a computer function as " ... unit" described in the explanation of the present Embodiment. Alternatively, the programs make a computer perform procedures and methods of" ... unit," described in the explanation of the present Embodiment.

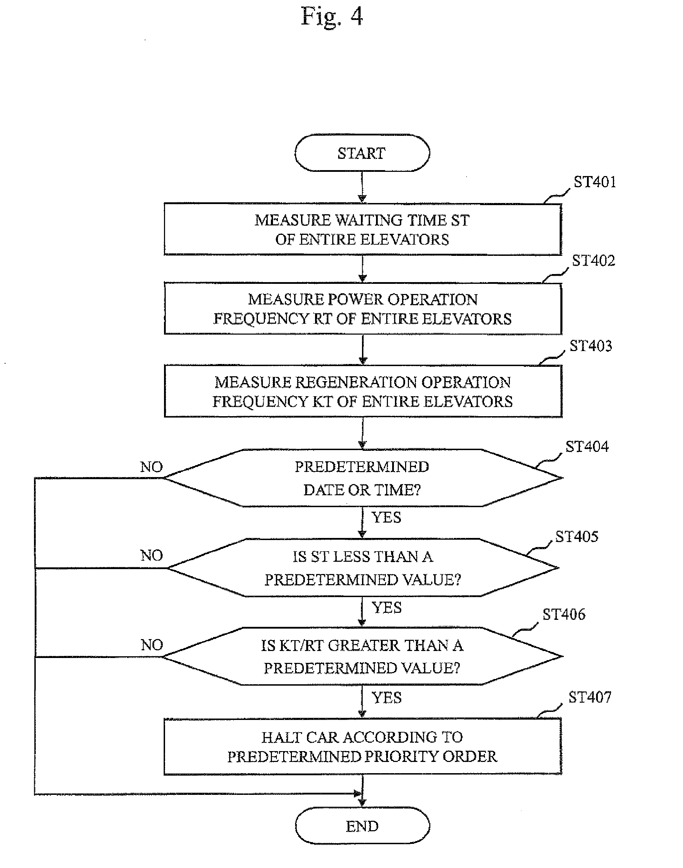

Fig. 4 is a flowchart showing an elevator group management method (operations of the group management apparatus 101) according to the present Embodiment. The flowchart mainly shows procedures to halt an elevator. In other words, it shows procedures in the case of selecting a car 103 to be halted.

In the step ST401, the service status measurement unit 107 measures, based on a registration time (i.e., a generation time) of a landing call, an amount of waiting time ST of the entire elevators (hereinafter called an "elevator group") controlled as a group by the group management apparatus 101. The amount of waiting time ST may be measured, for example, every certain time of day or every day. Details of the processing of the step ST401 will be described below.

In the service status measurement unit 107, the time measurement unit 121 measures an amount of time between when a landing call is generated at a landing where each elevator of the elevator group arrives and departs and when one elevator of the elevator group arrives at the landing. The time measurement unit 121 accumulates data of the measured amount of time into the storage device 152. The delay state quantity calculation unit 122 tallies data of the amount of time accumulated in the storage device 152 by the time measurement unit 121, by using the processing device 151. Based on the corresponding tally result, the delay state quantity calculation unit 122 calculates a delay state quantity indicating a delay state of the elevator group in response to the landing call, by using the processing device 151. In this example, the delay state quantity calculation unit 122 calculates a mean value (i.e., the amount of waiting time ST) of the amount of time measured by the time measurement unit 121, as the delay state quantity. Note that the delay state quantity calculation unit 122 may calculate a ratio of the number of times that the amount of time measured by the time measurement unit 121 is greater than or equal to a predetermined amount of time (e.g., 60 seconds) to the number of times that a landing call is generated at the landing, for example, as the delay state quantity. That is, the delay state quantity calculation unit 122 may calculate a ratio that users are kept waiting long at the landing.

In the step ST402, the operation status measurement unit 109 measures a frequency RT (e.g., number of running times) of power operation of the entire elevator group. In the step ST403, the operation status measurement unit 109 measures a frequency KT (e.g., the number of running times) of regeneration operation of the entire elevator group. The operation status measurement unit 109 calculates a ratio KT/RT between the frequency of the regeneration operation and the frequency of the power operation. Details of the processing of the step ST402 will be described below.

In the operation status measurement unit 109, every time an elevator is operated, the operation state quantity measurement unit 123 accumulates data indicating time, an elevator operation direction (upward or downward), an amount of elevator operation time, an elevator operation distance, an elevator load detected by the car load detection unit 108, etc. in the storage device 152. Based on the data, the operation state quantity measurement unit 123 measures an operation state quantity indicating an operation state in the power direction and the regeneration direction of each elevator of the elevator group. For example, the operation state quantity measurement unit 123 measures the number of times of operation in the power direction and the regeneration direction of each elevator of the elevator group, as the operation state quantity. Note that the operation state quantity measurement unit 123 may measure a time or a distance of operation in the power direction and the regeneration direction of each elevator of the elevator group, as the operation state quantity. The operation state quantity measurement unit 123 accumulates data of the measured operation state quantity in the storage device 152. The ratio calculation unit 124 tallies the data of the operation state quantity accumulated in the storage device 152 by the operation state quantity measurement unit 123, by using the processing device 151. Based on the corresponding tally result, the ratio calculation unit 124 calculates a ratio (i.e., the ratio KT/RT) of the operation state quantity in the regeneration direction of the elevator group to the operation state quantity in the power direction of the elevator group, by using the processing device 151.

In the step ST404, based on information output from the clock 112, the operation halt unit 125 judges whether it is currently a predetermined date (e.g., winter or summer) or not, or whether it is currently a predetermined time (e.g., between midnight and early morning) or not, by using the processing device 151. When "YES" in the step ST404, the operation halt unit 125 judges whether an amount of waiting time ST of the entire elevator group is less than a predetermined value (e.g., 20 seconds) or not, by using the processing device 151, in the step ST405. When "YES" in the step ST405, the operation halt unit 125 judges whether the ratio KT/RT between the frequency of the regeneration operation and the frequency of the power operation is greater than a predetermined value (e.g., 2.0) or not, by using the processing device 151, in the step ST406. When "YES" in the step ST406, the operation halt unit 125 selects an elevator according to a predetermined priority order in the step ST407. Then, the operation halt unit 125 halts the selected elevator. Note that either of the step ST404 or the step ST405, or alternatively both of them may be omitted. Details of the processing of the steps ST404 to ST407 will be described below.

In the operation halt unit 125, when the ratio calculated by the ratio calculation unit 124 is greater than a predetermined ratio, the assigned car selection unit 106 selects an elevator from the elevator group according to a preset priority order. In the case of applying the step ST405, further when the delay state quantity calculated by the delay state quantity calculation unit 122 is less than a predetermined quantity, the assigned car selection unit 106 selects an elevator from the elevator group according to the priority order. In the case of applying the step ST404, further when the current time and date corresponds to a predetermined period, the assigned car selection unit 106 selects an elevator from the elevator group according to the priority order. Finally, the car halt unit 110 halts the operation of the elevator selected by the assigned car selection unit 106.

Note that, when "NO" in the step ST404, "NO" in the step ST405, or "NO" in the step ST406, if there is an already halted elevator, operation of the elevator may be automatically restarted.

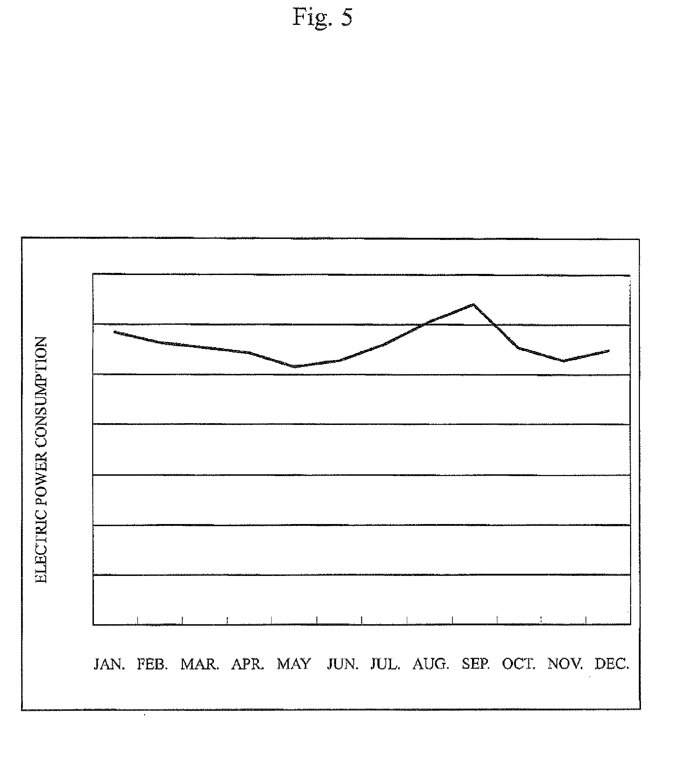

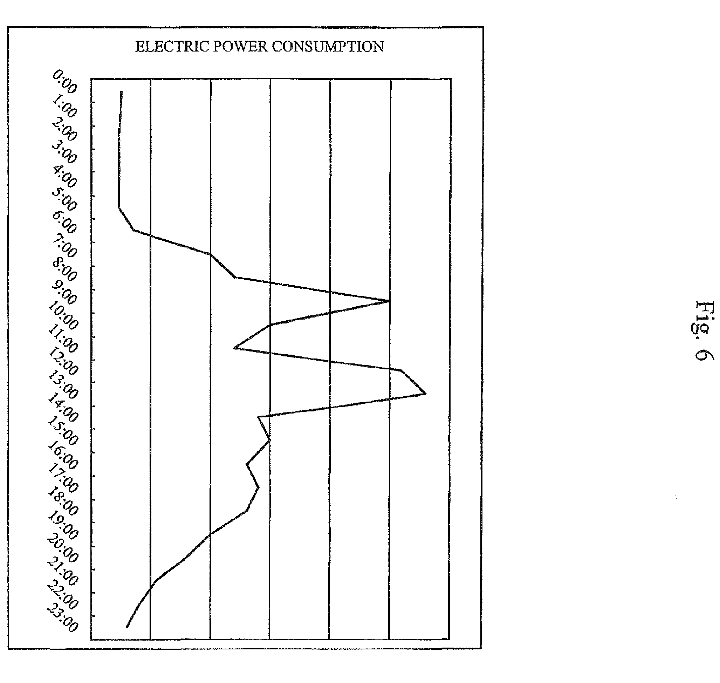

Figs. 5 and 6 are graphs showing general electric power consumptions.

Fig. 5 shows an amount of electric power consumption of each month and Fig. 6 shows an amount of electric power consumption of each time of day. As seen from the graph of Fig. 5, the amounts of electric power consumption are high especially in winter and summer compared with other months. As a social situation in recent years, it is starting to be encouraged by utility firms to hold down electric power consumption especially at this time of year. As seen from the graph of Fig. 6, the amount of electric power consumption is very little in the midnight time of day and the use of elevators is low. Therefore, countermeasures, such as halting a predetermined number of elevators, in the midnight time of day of winter and summer, are starting to be required even for elevators. Accordingly, in order to meet requirements, such as a desire to halt an elevator, for example, in January and September because of the large amounts of electric power consumption, and a desire to halt an elevator from midnight to early morning because of the low use, it is effective to set the date or time judged by the operation halt unit 125 in the step ST404. For example, the operation halt unit 125 judges whether the current month is January or September or not, and, if it is so, can halt an elevator selected according to the predetermined priority order. Moreover, the operation halt unit 125 judges whether the current time is between midnight and early morning or not, and, if it is so, can halt an elevator selected according to the predetermined priority order. Note that the date and time used as criteria shall be previously set in the storage device 152.

Thus, according to the present Embodiment, a control can be performed in such a way that the elevators are operated only in a specific period and a specific time of day based on the date and time information, and also a control can be performed in such a way that the elevators are operated all day. Thereby, the versatility is increased. Note that the above controls can be performed not only in the case of a plurality of elevators being controlled, but also in the case of one elevator being controlled.

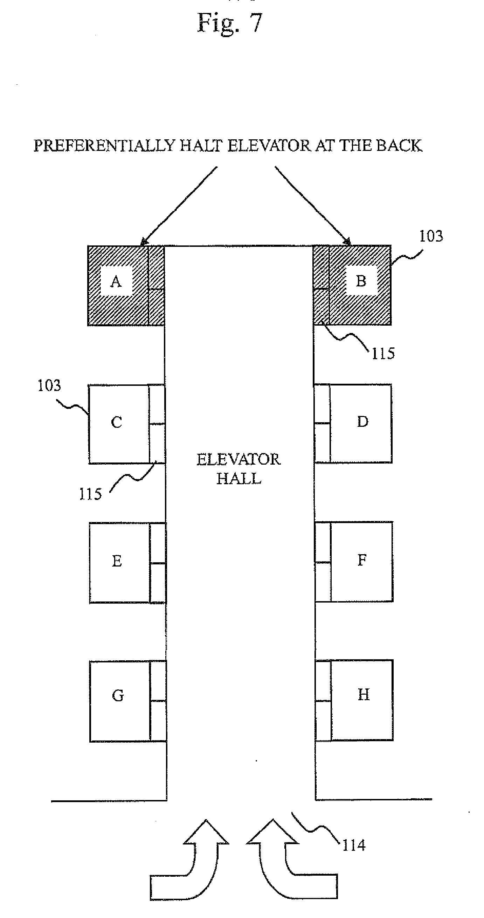

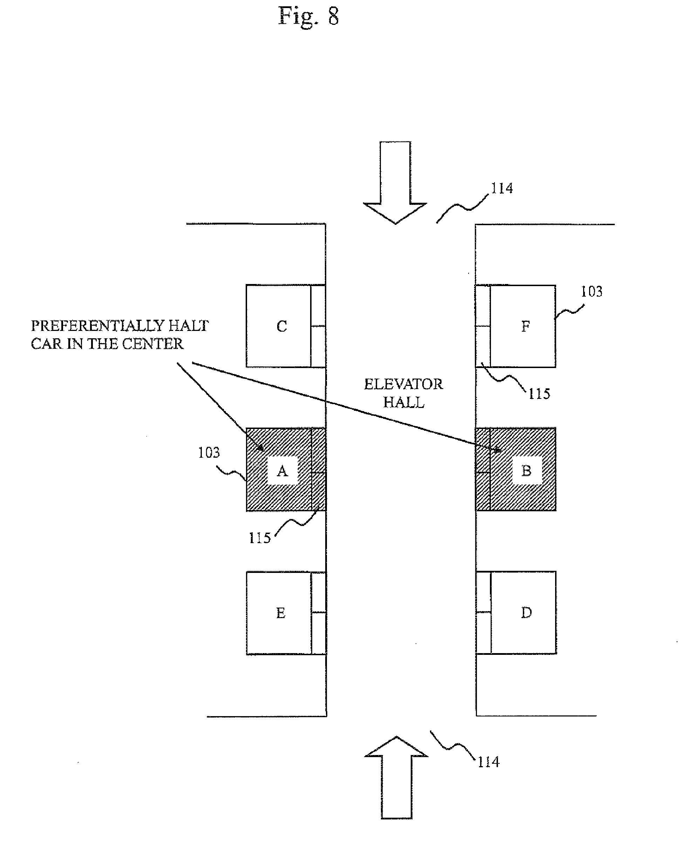

Figs. 7 and 8 are diagrams showing examples of a priority order to halt an elevator.

In the example of Fig. 7, eight elevators are arranged in such a way that four of them face the other four, and the back of an elevator hall (i.e., a landing) is a dead end. Generally, since users wait at the front (i.e., as close as possible to an entrance 114) of the elevator hall in many cases, it is less likely that the convenience is degraded if the cars 103 placed at the back are halted preferentially. Therefore, in the case of this example, the operation halt unit 125 selects elevators in order of decreasing distance from the entrance 114 to their landing side doors 115, in the step ST407. Specifically, the elevators to be halted are selected in order of A, B, C, D, E, F, G, and H. Note that the relation of prior and posterior between A and B, C and D, E and F, and G and H may be reversed respectively. On the other hand, in the example of Fig. 8, six elevators are arranged in such a way that three of them face the other three, and it is possible to get into from both the sides of an elevator hall. As described above, since users wait at the from (i.e., as close as possible to the entrances 114) of the elevator hall in many cases, it is less likely that the convenience is degraded if the cars 103 placed in the center are halted preferentially. Therefore, also in the case of this example, the operation halt unit 125 selects elevators in order of decreasing distance from the entrances 114 to their landing side doors 115, in the step ST407. Specifically, the elevators to be halted are selected in order of A, B, C, D, E, and F. Note that the relation of prior and posterior between A and B may be reversed respectively. Moreover, the relation of prior and posterior among C, D, E and F may be arbitrary.

Thus, according to the present Embodiment, the priority order is set based on the arrangement of the landing side door 115 of each elevator at the landing where each elevator of the elevator group arrives and departs. Thereby, the convenience is enhanced.

As described above, the elevator group management apparatus 101 explained in the present Embodiment manages a plurality of elevators as a group. The group management apparatus 101 includes the service status measurement unit 107 that measures a service status of the entire elevators. The group management apparatus 101 includes the car load detection unit 108 that detects a car load. The group management apparatus 101 includes the operation status measurement unit 109 that measures one of the number of running times, the amount of running time, and the running distance of a car operated in each of the power direction and the regeneration direction based on the detected car load. The group management apparatus 101 includes the car halt unit 110 that achieves electric power saving by preferentially and automatically halting a predetermined specific elevator when there is leeway in a service status based on the date or time information, and a value obtained by comparing one of the number of running times, the amount of running time, and the running distance of each of the power operation and the regeneration operation is greater than a predetermined value, by using detection results of the service status measurement unit 107 and the operation status measurement unit 109.

According to the present Embodiment, since an elevator is halted based on the result of comparing the frequencies of the power operation and the regeneration operation, it is possible to increase the tendency of a car operated in the regeneration direction, as a whole, in view of a long period such as one day. Thereby, in the entire elevator group, the loads applied to the motors of the elevators can be suppressed, and electric power consumption can be reduced. That is, according to the present Embodiment, in the group management apparatus 101, since a car 103 is halted based on the result of measuring frequencies of the power operation and the regeneration operation of the car 103, the effect of reducing the consumed electric power of the entire elevators can be obtained. Thus, it is possible to provide the elevator group management apparatus 101 having high versatility and a stably-large electric-power-saving effect.

According to the present Embodiment, since a car 103 to be halted is selected in consideration of arrangement of the elevators, it is possible to realize a convenient elevator operation. For example, since the cars 103 far from the front of the elevator hall are preferentially halted, it is possible to realize electric power saving without reducing the convenience.

As described above, the elevator group management apparatus 101 according to the present Embodiment can achieve electric power saving without impairing the convenience.

### Brief Description of Drawings

Fig. 1 is a block diagram showing configuration of an elevator system according to Embodiment 1;
Fig. 2 is a block diagram showing configuration of an elevator group management apparatus according to Embodiment 1;
Fig. 3 is a diagram showing an example of hardware configuration of an elevator group management apparatus according to Embodiment 1;
Fig. 4 is a flowchart showing an elevator group management method according to Embodiment 1;
Fig. 5 is a graph showing a general electric power consumption;
Fig. 6 is a graph showing a general electric power consumption;
Fig. 7 is a diagram showing an example of a priority order to halt an elevator according to Embodiment 1; and
Fig. 8 is a diagram showing an example of a priority order to halt an elevator according to Embodiment 1.

### Reference Signs List

100 Elevator System, 101 Group Management Apparatus, 102 Car Control Unit, 103 Car, 104 Landing Button, 105 Operation Control Unit, 106 Assigned Car Selection Unit, 107 Service Status Measurement Unit, 108 Car Load Detection Unit, 109 Operation Status Measurement Unit, 110 Car Halt Unit, 111 Communication Unit, 112 Clock, 113 Landing Station, 114 Entrance, 115 Landing Side Door, 121. Time Measurement Unit, 122 Delay State Quantity Calculation Unit, 123 Operation State Quantity Measurement Unit, 124 Ratio Calculation Unit, 125 Operation Halt Unit, 151 Processing Device, 152 Storage Device, 911 CPU, 912 Bus, 913 ROM, 914 RAM, 915 Communication Board, 921 Flash Memory, 922 OS, 923 Program Group, 924 File Group.

## Claims

1. An elevator group management apparatus for managing a plurality of elevators as a group comprising:
an operation state quantity measurement unit adapted to measure an operation state quantity indicating an operation state in a power direction and a regeneration direction of each elevator of the group, and to accumulate data of the measured operation state quantity in a storage device;
a ratio calculation unit adapted to tally the data of the operation state quantity accumulated in the storage device by the operation state quantity measurement unit, and, based on a corresponding tally result, to calculate a ratio of the operation state quantity in the regeneration direction of the group to the operation state quantity in the power direction of the group; and
an operation halt unit adapted to select, when the ratio calculated by the ratio calculation unit is greater than a predetermined ratio, an elevator from the group according to a preset priority order, and to halt an operation of the selected elevator.

2. The elevator group management apparatus according to Claim 1, further comprising:
a time measurement unit adapted to measure an amount of time between when a landing call is generated at a landing where each elevator of the group arrives and departs and when one elevator of the group arrives at the landing, and to accumulate data of the measured amount of time in the storage device; and
a delay state quantity calculation unit adapted to tally data of the amount of time accumulated in the storage device by the time measurement unit, and, based on a corresponding tally result, to calculate a delay state quantity indicating a delay state of the group in response to the landing call,
wherein, further when the delay state quantity calculated by the delay state quantity calculation unit is less than a predetermined quantity, the operation halt unit selects an elevator from the group according to the priority order and halts an operation of the selected elevator.

3. The elevator group management apparatus according to Claim 1, wherein, further when a current time and date corresponds to a predetermined period, the operation halt unit selects an elevator from the group according to the priority order and halts an operation of the selected elevator.

4. The elevator group management apparatus according to Claim 1, wherein the operation state measurement unit measures any of a number of times, an amount of time, and a distance of an operation in the power direction and in the regeneration direction of each elevator of the group, as the operation state quantity.

5. The elevator group management apparatus according to Claim 2, wherein the delay state quantity calculation unit calculates a mean value of the amount of time measured by the time measurement unit, as the delay state quantity.

6. The elevator group management apparatus according to Claim 2, wherein the delay state quantity calculation unit calculates a ratio of a number of times that the amount of time measured by the time measurement unit is greater than or equal to a predetermined amount of time to a number of times that the landing call is generated at the landing, as the delay state quantity.

7. The elevator group management apparatus according to Claim 1, wherein the priority order is set based on an arrangement of a landing side door of each elevator at a landing where each elevator of the group arrives and departs.

8. An elevator group management method for managing a plurality of elevators as a group comprising:
measuring an operation state quantity indicating an operation state in a power direction and a regeneration direction of each elevator of the group, and accumulating data of the measured operation state quantity in a storage device, by an operation state quantity measurement unit;
tallying data of the operation state quantity accumulated in the storage device by the operation state quantity measurement unit, and, based on a corresponding tally result, calculating a ratio of the operation state quantity in the regeneration direction of the group to the operation state quantity in the power direction of the group, by a ratio calculation unit; and
selecting, when the ratio calculated by the ratio calculation unit is greater than a predetermined ratio, an elevator from the group according to a preset priority order, and halting an operation of the selected elevator, by an operation halt unit.
